# EUROPEAN PATENT SPECIFICATION

(11) **EP 4 576 049 B1**
(45) Date of publication and mention of the grant of the patent: **12.08.2026**
(21) Application number: 23386137.6
(22) Date of filing: 21.12.2023
(51) Int. Cl.: G09B 21/00, G06F 3/01, G06V 40/20

(54) **SYSTEM AND METHOD OF USER INTERFACE THROUGH SMART OBJECTS**
SYSTEM UND VERFAHREN EINER BENUTZERSCHNITTSTELLE DURCH INTELLIGENTE OBJEKTE
SYSTÈME ET PROCÉDÉ D'INTERFACE UTILISATEUR PAR L'INTERMÉDIAIRE D'OBJETS INTELLIGENTS

(43) Date of publication of application: 25.06.2025
(73) Proprietor: Athena-Research and Innovation Center in Information, Communication and Knowledge Technologies, 15125 Marousi, Athens (GR)
(72) Inventor: Koutsoudis, Anestis, 67132 Xanthi (GR); Ioannakis, Georgios Alexis, 68131 Alexandropolis (GR); Pistofidis, Petros, 65302 Kavala (GR); Arnaoutoglou, Fotios, 67100 Xanthi (GR)
(74) Representative: Panagiotidou, Effimia

(56) References cited:
- CN-A- 114 967 913
- US-A1- 2015 336 017
- US-A1- 2022 065 650
- WANG XIYUE ET AL: "TouchPilot: Designing a Guidance System that Assists Blind People in Learning Complex 3D Structures", 3RD INTERNATIONAL WORKSHOP ON OPEN CHALLENGES IN ONLINE SOCIAL NETWORKS, ACMPUB27, NEW YORK, NY, USA, 22 October 2023 (2023-10-22), pages 1 - 18, XP059422867, ISBN: 979-8-4007-0229-7, DOI: 10.1145/3597638.3608426
- AMY HURST: "Designing Interactions for 3D Printed Models with Blind People", 19 October 2017 (2017-10-19), New York, NY, USA, pages 200 - 209, XP093167132, ISBN: 978-1-4503-4926-0, Retrieved from the Internet <URL:https://dx.doi.org/10.1145/3132525.3132549> [retrieved on 20240527]

## Description

The method and system of the present invention belong to the field of information and communication technologies, and the primary objective is to provide informative and/or educational content to users (in a particular application, to visually impaired users) through tactile exploration and audio narration by choice. In the context of the invention, the user interface enables interaction with specific processes using Internet of Things (IoT) technologies, smart devices (mobile phones, tablets), three-dimensional (3D) digitizing and printing technologies, and computer vision (CV). The present invention can be adapted to be implemented in non-designated spaces, i.e. without installation restrictions, to overcome accessibility challenges for visually impaired persons and/or can be part of an experience before, during and after physical presence in a space.

The invention solves the technical problem of optimizing the flow of information to the user by incorporating technical elements for managing and controlling the flow of information in objects directly perceived by the user, whether visible, audible or tactile.

In some cases, tactile contact and exploration with objects is prohibited. This restriction may be due to a number of reasons, such as: *i)* protecting and ensuring the integrity of the objects; *ii)* avoiding damage that could lead to loss of knowledge; *iii)* the very size and/or location of the object making access difficult or impossible; and others. In addition, the tactile constraint may be motivated by the fact that the object and/or the information it expresses does not exist in the physical world. This may be true in cases where the object is related to an event, a series of events, something that has been destroyed in the past, or even something that is not visible to the naked eye or is the rendering of a theory.

Access to the object and the information it carries becomes particularly problematic when it comes to visually impaired people. The invention additionally provides a solution to the problem of enhancing the accessibility of a visually impaired person to this type of information. It is based on the fact that the tactile perception of the morphology of an object is the main substitute for vision and that narration is an act of communication and knowledge transfer.

The invention solves the above technical problem, as it involves the creation of tactile explorable content, its integration into an Information and Communication Technology (ICT) infrastructure that allows human-machine interaction. These different stages are described independently below.
(i) Content creation - 3D digitization and printing to create 3D Printed Objects (3DPO): the method is initially based on the combination of various technologies, such as 3D digitization and processing, in order to create data that, in terms of quality and accuracy, reproduce geometric and morphological features of parts of the real world (museum objects, any physical objects, collections of objects, regions, architectural works, landscapes, human anatomy, mechanical components, scientific and technical content, etc.) with high detail and precision. These parts can either already exist in the real world and lead to a 3D digital replica, or be simulated/approximated/modified through 3D modelling based on established documentation sources, in order to compose a sequence of 3D replicas representing an object or event or a number of related events or objects in their various states. The subject matter may come from any content area (e.g. educational, scientific, recreational, cultural, functional, industrial, gamification, health, engineering, etc.). The processing of this 3D data can serve to enhance certain morphological features so that they can be more easily recognized visually by the user, or tactilely (through touch - tactile exploration) in the case of visually impaired people. These 3D data are implemented through 3D printing technologies at variable scales and effectively allow for the creation of identical replicas. These replicas are tactile and therefore tactilely explorable and allow information that is otherwise impossible to be explored by a visually impaired person. For simplicity, throughout this paper reference is being made to all of the above versions of 3D printed replicas or sequences thereof as 3DPOs (3D Printed Objects).
(ii) Information and Communication Technology (ICT): at the same time, 3DPOs belong to an Information and Communication Technology (ICT) infrastructure that exploits features found in Internet of Things (IoT) devices as well as Computer Vision (CV) systems. In order for a 3DPO to belong and operate within this infrastructure, it is required to incorporate loT technologies, physical trigger points (switches) and/or synthetic trigger points (non-physical switches), detected through CV algorithms. CV algorithms for example, recognize the smart object, detect where the user's hands are located on the 3DPO, e.g. synthetic trigger point, etc. and whether the user makes a movement (gesture) that activates one of the functions. Both types of trigger points exhibit visual and non-visual properties to aid their detection and localization by both fully and partially blind users. A 3DPO has the ability to monitor and detect events or even record parameters or commands provided by its environment or its user. It has the ability to process and analyze locally the events and/or parameters recorded and transfer them to other devices within the ICT infrastructure that it operates. A central control point shall monitor all participating elements via an Intranet or Internet and shall allow management functions, including real-time monitoring and recording of usage. A 3DPO serves as a communication intermediary and creates a fully closed loop of interaction in which users can control the environment and real-world events, while visually and/or tactilely exploring and understanding the physical/non-physical properties of the 3DPO. Therefore, a 3DPO can be seen as a unique controller that, in addition to its primary function of triggering one or more events, offers a set of morphological features that, in combination with visual and/or tactile exploration, make up a more complete and therefore more meaningful contextual experience, particularly for visually impaired and visually impaired people.
(iii) Human-Computer Interaction: In the same infrastructure, smart devices (e.g. smart telephones - smartphones) coexist and are available to each user in order to assist in specific interaction processes and deliver the audio content at the user level. Note that the same audio content can be delivered by the 3DPO itself, but the use of an additional smart device may serve specific needs of the users or the context in which several 3DPOs are operating simultaneously (e.g. school classroom, exhibition space, museum hall, outdoor space, etc.). A smart device interacts with the 3DPOs. Such interaction processes (functional) are the pairing (binding) session that could be based on NFC technologies, BEACONS (proximity between 3DPO and smartphone), or gestures recognized by the CV subsystem. The smartphone or similar device implements the required pairing that enables personalized and on-demand audio streaming (narration), as well as the routing of its activation/management. Multiple numbers of 3DPOs and users can operate in the same or in a remote location, as the ICT infrastructure allows simultaneous manipulation of trigger points as well as the flow and control of the playback of the audio narrative. The system through the 3DPOs allows various activation options (single, quick double, prolonged press), which are used to allow different functions to be performed but using one trigger point.

Among the most representative solutions currently proposed to solve the same problem are the solutions revealed in the following documents:

The published scientific article entitled "Dominguez, F., & Ochoa, X. (2017, April). Smart objects in education: an early survey to assess opportunities and challenges. In 2017 Fourth International Conference on eDemocracy & eGovernment (ICEDEG) (pp. 216-220). IEEE." by Dominguez/Ochoa, describes the transformation of teaching and the educational process through the introduction of smart object-devices equipped with sensors. It is an early research that aims to document the experience of students and teachers in using smart objects.

The published scientific article entitled "Pistofidis, P., Arnaoutoglou, F., loannakis, G., Michailidou, N., Karta, M., Kiourt, C., ... & Koutsoudis, A. (2023). Design and evaluation of smart-exhibit systems that enrich cultural heritage experiences for the visually impaired. Journal of Cultural Heritage, 60, 1-11.", presents the implementation of the smart object as an exhibit in a museum. Some high-level implementation information is given which only concerns the version (implementation framework) where only real switches are used without using CV technology and with mandatory coupling with a smart wearable device with near-field communication to play the narratives.

The published scientific article entitled "Pistofidis, P., loannakis, G., Arnaoutoglou, F., Michailidou, N., Karta, M., Kiourt, C., ... & Koutsoudis, A. (2021). Composing smart museum exhibit specifications for the visually impaired. Journal of Cultural Heritage, 52, 1-10.". It describes on a theoretical level the use of a smart museum exhibit (subset of the smart object) in the version (implementation framework) where only real switches are used without using CV technology and with mandatory coupling with a smart wearable device with an NFC sensor to play the narratives.

The published scientific article entitled "Accessible Museum Collections for the Visually Impaired: Combining Tactile Exploration, Audio Descriptions and Mobile Gestures", DOI: 10.1145/2957265.2963118", presents at an initial level a system based on tablet and screen gestures as well as passive infrared sensors to support the movement of a visually impaired person in a space and guide them to a 3D-replica of an exhibit that carries tactile trigger points on it but which communicate wired to an external control module (respectively wired operation and non-embedded within the exhibit replica). The system does not serve multiple users simultaneously, does not seem to allow free tactile exploration of the replica due to wiring and is not interconnected as an loT device to any infrastructure.

A system for sighted people is disclosed on the Internet site (http://www.visualdimension.be/v-must/) where, using an accelerometer inside a 3D-print of a museum exhibit, the angle of rotation of the 3D-print in 3D-space is detected in order to rotate a 3D-model on a screen located in front of the 3D-printed exhibit. Points of interest on the 3D-print are activated using photo-sensors (tactile non-discrete switches presented as holes) in order to change and focus the projection of the digital content on the screen. The system does not appear to cater for visually impaired people and its operation is limited to a specific space.
US2015/0336017 A1 discloses a cell phone-enabled doll companion allowing a child novel ways to self-interact and self-execute applications while requiring no intervention or supervision from the parent.
The document by Wang Xiyue et al, titled "Touch Pilot: Designing a Guidance System that Assists Blind People in Learning Complex 3D Structures", discloses a system which guides users step-by-step through navigation, exploration of hierarchical elements and confirmation of their entire areas.
Furthermore, the documents by Amy Hurst titled "Designing Interactions for 3D Printed Models with Blind People", dated 19.10.2017, US2022/065650 and CN114967913A disclose background technology useful for understanding the functionality of the present invention.

In a brief disclosure of the invention, this is a method and system for supporting a tactile user interface with smart objects (3DPOs), particularly useful in the case of an interface for visually impaired people or even those with complete vision loss. The embodiment of the invention is based on 3D digitization, 3D data processing and printing, Internet of Things (IoT) and computer vision (CV) technologies. The software serving it is embedded logic for micro/single board computers and network services operating on the basis of the client-server model. The method and system of the present invention achieve information transfer through general and focused narratives as well as tactile exploration of highly geometrically accurate 3D printed objects (3DPOs) that can be produced at different scales and from different materials or a combination thereof.

The invention is defined by the appended claims 1-9.

The 4 Drawings accompanying the description briefly illustrate the following:
Figure 1 is a general illustration of the parts of the system in possible versions of its operation.
Figure 2 illustrates an example of the 3DPO parts and basic electronic equipment.
Figure 3 illustrates a visualization of intubation generation of a new 3DPO and its integration into the system.
Figure 4 illustrates a visualization of intubation using a 3DPO.

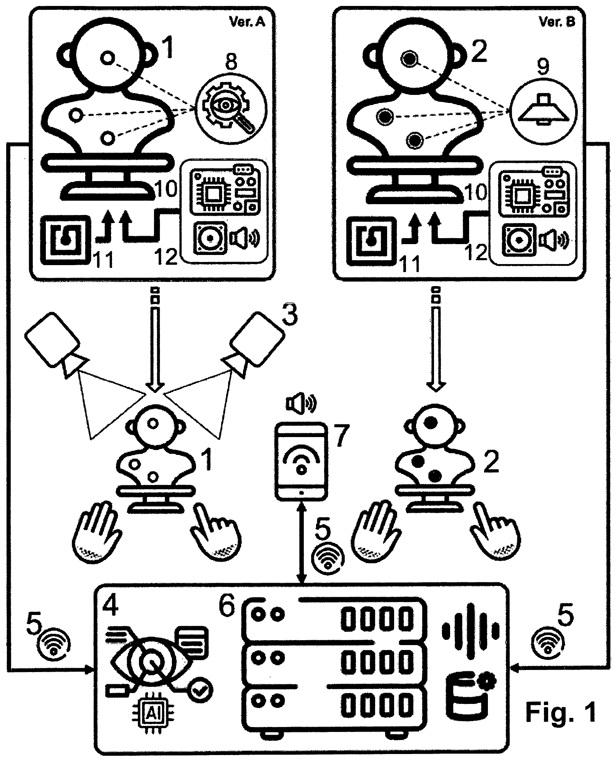

The method and embodiment of the invention as a system is described in Figure 1. The figure illustrates the system which consists of 3DPOs (1 and 2), the Computer Vision (CV) subsystem (3 and 4), the central server (6) and network infrastructure (5) and the portable players (7).

A number of smart objects (3DPOs) can be integrated into the system. The 3DPOs that are integrated are of two types (1 and 2). Type A includes synthetic trigger points (version A - ver. A) (8) and type B includes real trigger points (version B - ver. B) (9).

In version A, during the tactile exploration of a 3DPO (1) by a user, any possible gestures of the user on the synthetic trigger points (8) are recorded by the Computer Vision (CV) subsystem (3 and 4) and recognized. The synthetic points (8) are color-coded and are also differentiated in terms of their texture compared to the rest of the shell (19). Thus, they are perceived both visually and tactilely.

In version B there are actual trigger points (9). These are also distinct both tactilely (protruding from the surface of the shell) and visually (differing in color from the rest of the shell (19)). Their activation, in the case of classical contact switches (push buttons, triggers, etc.), is effected by pressure (instantaneous, prolonged, double quick, etc.). On the other hand, in the case of capacitive switches, their activation is effected by the variation of the load resulting from the tactile contact of the user's fingers with them for different durations.

The system parts include the set of 3DPOs (1 and 2), the portable players (7), the camera array of the CV subsystem (3), the central system server (4 and 6) and the network infrastructure (5) that allows all the previous parts to communicate.

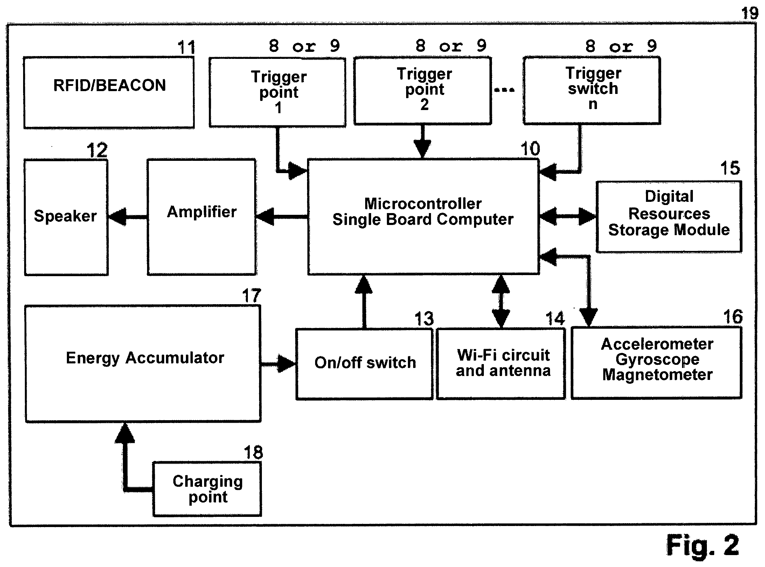

Furthermore, with the aid of a non-limiting example and with reference to the other attached Figures, the present invention and its functionality is presented. In Figure 2 (3DPO analysis) the single board microcontroller/computer (10), three trigger points (8 or 9), indicative power accumulator (17), 3DPO activation switch (13), charging point (18), loud speaker driving sound amplifier (12), digital resource storage module (15), a radio frequency identification (RFID or BEACON) (11) are distinguished. As shown in Figure 2, each 3DPO consists of:
- The 3D shell (19) of the 3DPO (usually two sections or maybe more depending on the needs and morphological requirements of each subject), with the specially designed bases for supporting the necessary logistical elements inside. The shells (19) are obtained after a specific study of each object and its morphology. The parts of the shell are combined to create a single structure.
- Existence of trigger points (natural or synthetic), which will correspond to each point or area of interest on its surface that needs narrative enrichment.
- Single-board computer or microcontroller (10), with wireless communication capabilities, providing multiple contacts for connecting physical trigger points, capable of operating with an energy accumulator (17), and supporting its recharging (18).
- Connection with other electronic components with sound amplifier and speaker (12), accelerometer (16), gyroscope (16), magnetometer (16).
- Passive or active radio frequency identification (RFID or BEACON) (11) for use in the 3DPO identification mechanism.
- 3DPO on/off switch (13).
- Wi-Fi circuit and antenna (14).
- Digital resource storage module (15).
- 3DPO charging point (18).

More specifically, the system implements free tactile cognition with independent (wireless) 3DPOs that provide general and region-focused descriptive acoustic narratives. As part of this operation, the software of the present invention supports:
- The management and streaming of the audio narratives that make up the available digital resources, with language, content volume and narrative streaming speed configuration.
- The non-serial reproduction of audio narration.
- Serving and executing user commands as translated through the trigger points distributed on the surface of the 3DPOs or as recognized as gestures on the surface of the 3DPO by the computer vision subsystem.
- Simultaneous support for multiple users, with them exploring tactile and interacting with different 3DPOs operating on a common ICT.
- Playback of audio narration from the 3DPO internal speaker (12).
- Optional coordination of communication with the coupling devices and playback of audio narration from them.
- The tracking of the position and orientation of the 3DPO in relation to the user's hands and the recognition by computer vision methods of the various gestures above or next to a point of interest.
- The continuous and organized recording of the system usage parameters for the study and evaluation of the usage.

The users of the method and/or system according to the present invention (e.g., the learners or visitors of a museum or exhibition space, an educational classroom, a student, a trainee, an apprentice or even an employee, etc.), will be able to listen to the narratives concerning the content displayed by the 3DPOs, either through smart mobile devices and headsets, or through speakers embedded therein. The experience of the narratives is tailored to the needs and preferences of each user based on a digital profile stored on the server and related to playback parameters (e.g. language and playback speed) and content of the narratives (e.g. short, long).

The use of handheld devices to play the narratives (e.g. mobile phone, tablet) is supported by near-field communication technologies to achieve coupling with a 3DPO (RFID and/or BEACON) (11). These handheld devices operate and communicate with the wireless ICT infrastructure of the system. The wireless communication of all the devices in the system including the server is carried out by the ICT networking equipment.

The operation of a 3DPO (1 and 2) is based on logic that runs both within the single-board microcomputer/computer that controls the response of its actual actuation points (8 and 9); the supervision by one or more cameras (3) that feed the computer vision algorithms (4); and the server (6) that manages the commands and the playback of the appropriate audio narratives. The ICT infrastructure (5 and 6) provides a system administrator with an overall view of the status parameters and usage of all 3DPOs and even an estimation of the energy autonomy level of each of the 3DPOs operating in the wireless ICT. At the same time, an extensive history of all the actions performed by the users of the 3DPOs is also available in order to exploit them to understand their utilization pattern. In cases where the 3DPOs do not carry actual trigger points then their activation is perceived by the visual gesture recognition algorithms (4) on the surface of the 3DPOs (1). More than one camera comes (3) to accommodate any visual occlusions that arise when handling a 3DPO in the hands of a user. Visual occlusion is defined as the inability to capture the object and the positions of the user's hands and gestures from specific viewpoints related either to the user's position in space or to the morphology of the 3DPO itself being explored at a given moment.

Users of the 3DPO (1 and/or 2) are able to listen to the narratives through the 3DPO itself or through smart mobile devices (7) and headphones with which they are equipped. The narratives may be either human recordings or a text-to-speech technology derivative based on the level of the technique. The narration experience is tailored to the needs and preferences of each user by selecting the appropriate settings and parameters for the desired experience (e.g. narration playback speed, narration language, duration and depth of thematic analysis.) The listening devices (7), are smart mobile phones, which carry a headphone jack and have the ability to communicate, so that they can read the radio identities (11) carried by the 3DPOs (session link binding process). These devices are also connected to the central server (6) via the same ICT (5).

The software that has been implemented to support the 3DPO system functions has been developed in two distinct layers. The first level constitutes the logic that drives the mechanisms of the microcontroller/single board computer (10) hosted within each 3DPO. The second layer constitutes a set of network services that manage and execute the commands and data sent by each 3DPO over the ICT (5 and 6). The communication between the server of the above services and the 3DPOs is carried out via the wireless communication provided by the ICT. It is through this communication that the execution and playback control of the audio narratives provided by the 3DPOs is performed.

Also, at regular intervals the 3DPOs send data concerning their status, in terms of their level of energy autonomy, in order to keep the central control point of the system running on the server constantly updated.

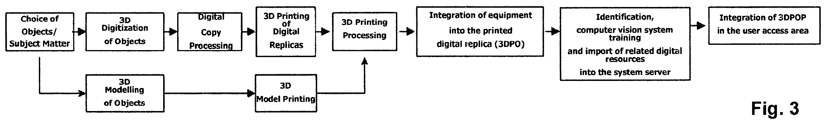

Figure 3 provides a visualization of the intubation construction of a new 3DPO (1 and 2) and its integration into the system. The process starts with the selection of the subject and its 3D digitization. This is followed by appropriate processing of the 3D data to produce the 3D digital copies via 3D printing. In case a 3D digitization method cannot be applied then the 3D model data is derived from a 3D modelling method. As before, this data is routed to 3D printing. Next stage, is the installation of the logistic equipment inside the prints that now form a 3DPO. This is followed by identification procedures (RFID and/or BEACON) (11) of the new 3DPO, training of the CV subsystem and importing the digital storytelling resources into the system server (6).

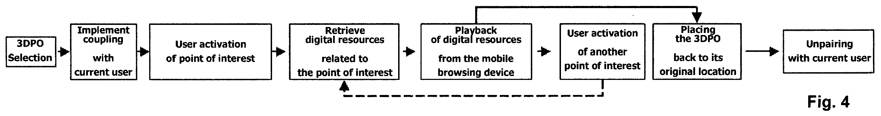

In addition, Figure 4 provides a visualization of an example of the use of a 3DPO. The user selects a 3DPO and holds it in his hands. The example of intubation refers to the case where the user wishes to listen to the audio narratives via their mobile phone. Therefore, the process of coupling the 3DPO (and 2) with the portable player (7) follows. As the user tactilely explores the 3DPO, he or she activates a point of interest. Through the ICT infrastructure (5) the digital resources are retrieved from the system server (6) and the digital resources are played back from the portable browsing device (user's mobile phone 7). The user continues to activate another point of interest and the previous process is repeated. The user places the 3DPO in its initial position and the server takes over the de-coupling with the current user. The user continues the same process with another 3DPO.

Non-limiting examples of embodiments of the invention are described below.

3DPO.Collection is an experimental system for the development of tactilely accessible exhibitions of objects focusing mainly on visitors with visual impairment and/or visual disabilities. It is based on the idea of 3DPOs defined as 3D printed copies of real objects, which, with the integration of an appropriate microelectronic infrastructure, allow tactile interaction with visitors. This interaction is enriched by the use of acoustic descriptions activated by switches. The narratives relate both to the whole object and to specific points or areas on it. The narratives are played audibly on portable devices such as a mobile phone and therefore the system can serve multiple visitors simultaneously. Smart objects are derived from highly geometrically accurate 3D digital replicas and printed in three dimensions to scale, for both practical and functional reasons. The aim is that the size and weight of each smart object should make it easy for visitors to handle it with their hands for as long as they wish. The software serving the 3DPO.Collection system was developed as embedded logic for single board microcomputers and network services with a client-server model. The system operates over a local wireless network to allow free placement of objects in the space.

The independent 3DPO.Area is a tactile map that comes to support visually impaired people in understanding the structure and content of a space (spatial positioning). A tactile map makes use of embossed coded elements that depict by tactile exploration characteristic points and paths of a space. These elements can be linear shapes, repeating patterns that define an area, Braille markings, etc. The 3DPO.Area system proposes to further enrich a tactile map by introducing audio messages (narratives) that provide additional information about the respective map elements. Through such an approach, the tactile map offers an experience that leads to the transfer of information to the user in a more interactive and intuitive way. More specifically, each area of interest on the map surface has a distinct switch that can also be tactilely perceived. The selection of each switch activates the relevant narrative leading to the on-demand listening of the audio information. A Braille-marked switch at the edge of the tactile map allows the language of the narratives to be changed. The logistical equipment available to 3DPO.Area allows it to be connected to screens thus extending its use to content for the wider public.

The embodiments described above are provided for illustrative purposes only and should not be construed as limiting the invention. Those skilled in the art will readily recognize various modifications and changes that can be made to the present invention that fall within the scope of the disclosure and application of the present invention.

## Claims

1. Man-machine interface system which comprises
a set of smart objects (3DPO) (1 and 2),
the system comprising
a communication network (5) to which smart objects have access,
a set of image capture media (3) capable of recording the smart objects (1 and 2), and capable of accessing the communication network (5),
a system server (6) capable of accessing the communication network (5), and capable of accessing a database (6), in which computer vision algorithms (4) for computer vision subsystem (3) operation, digital resource data (6), user profile data and system usage logging data (6) are stored, and capable of controlling and logging data flow (6) between the smart objects, and the image capture media (3),
wherein said smart objects comprise
a shell which corresponds to the morphology of the smart object,
an integrated audio playback system (12),
a set of trigger points, wherein the trigger points are tactile and/or color distinct (8 and 9),
a computer with wireless communication capabilities, with multiple contacts, with battery operation and sensor connectivity (10),
a passive or active radio frequency identification function for use in a smart object (3DPO) identification mechanism (11),
a smart object (3DPO) on/off switch (13),
a smart object (3DPO) charging point (18).

2. Man-machine interface system which comprises
a set of smart objects (3DPO) (1 and 2),
the system comprising
a set of smart mobile devices (7),
a communication network (5) accessed by the smart objects (1 and 2), the smart mobile devices (7), and a system server (6),
a set of image capture media (3) capable of recording the smart objects, and capable of accessing the communication network (5),
a system server (6) capable of accessing the communication network (5), and capable of accessing a database (6) in which computer vision algorithms (4) for computer vision subsystem (3 and 4) operation, digital resource data, user profile data and system usage log data (6) are stored, and capable of controlling and logging data flow between smart objects (6), smart mobile devices (7) and image capture media (3),
wherein the smart objects (1 and 2) comprise
a shell which corresponds to the morphology of the smart object,
a set of trigger points (8 and 9), wherein the trigger points are tactile and/or color distinct,
an audio system (12) operable to be connected via coupling or pairing with an external handheld device for audio playback
a computer with wireless communication capabilities (10), with multiple contacts, with battery operation (17) and with connection to sensors (16),
a passive or active radio frequency identification function (11) for use in a smart object (3DPO) identification mechanism,
a smart object (3DPO) on/off switch (13),
a smart object (3DPO) charging point (18).

3. Man-machine interface system according to claim 1 or 2, wherein the trigger points comprise physical switches with moving parts (9).

4. Man-machine interface system according to claim 1 or 2, wherein the trigger points comprise capacitive switches (9).

5. The man-machine interface system according to claim 4, wherein the capacitive switches are activated by the change in physical properties resulting from the tactile contact of the user's fingers for different times (9).

6. Man-machine interface system according to claim 1 or 2, wherein the trigger points are implemented as synthetic trigger points (8).

7. The man-machine interface system according to claim 6, wherein the synthetic trigger points are activated by recognition by the computer vision (CV) subsystem (3 and 4) of user gestures on the synthetic trigger points (8).

8. Man-machine interface method, using the system of any of claims 1 to 7, the method comprising
a tactile contact of a user with the smart object (1 and 2),
the possibility for the user to activate a set of functions related to the smart object,
wherein the set of functions comprises
ability to listen to text narratives through an audio reproduction system (12 and 7),
wherein the narratives are derived from a database (6) which is operatively connected to a system server (6) and are transmitted from the database (6) to the smart object (1 and 2) via a wireless communication network (5) upon activation of the respective function by the user and according to a corresponding user profile,
wherein the set of functions further includes
the ability for a passive or active radio frequency identification of said smart object,
the ability to enable control of audio playback by the user for a given smart object, either by tactile contact with the smart object (2) or by recognition of the user's gestures in relation to the surface of the smart object (1) by a computer vision subsystem (3 and 4),
the ability to charge the smart object,
the ability for coupling or pairing said smart object with an external handheld device for audio playback.

9. Man-machine interface method according to claim 8,
wherein activating, by the user, said set of functions on the smart object comprises activation through tactile contact with the smart object or through recognition of the user's gestures in relation to the surface of the smart object by a computer vision subsystem (3 and 4),
whereby listening to text narratives operates at the user's choice, either from a smart mobile device (7), or from the audio player embedded in the smart object (12).

## Patentansprüche

1. Mensch-Maschine-Schnittstellensystem, das einen Satz intelligenter Objekte (3DPO) (1 und 2) umfasst,
wobei das System umfasst:
ein Kommunikationsnetzwerk (5), auf das die intelligenten Objekte Zugriff haben,
einen Satz von Bilderfassungseinrichtungen (3), die dazu geeignet sind, die intelligenten Objekte (1 und 2) zu erfassen und auf das Kommunikationsnetzwerk (5) zuzugreifen,
einen Systemserver (6), der in der Lage ist, auf das Kommunikationsnetzwerk (5) zuzugreifen, und der in der Lage ist, auf eine Datenbank (6) zuzugreifen, in der Computervisionsalgorithmen (4) für den Betrieb des Computervisions-Subsystems (3), digitale Ressourcendaten (6), Benutzerprofildaten sowie Protokolldaten der Systemnutzung (6) gespeichert sind, und der in der Lage ist, den Datenfluss (6) zwischen den intelligenten Objekten und den Bilderfassungsmedien (3) zu steuern und zu protokollieren, wobei die genannten intelligenten Objekte umfassen:
eine Hülle, die der Morphologie des intelligenten Objekts entspricht,
ein integriertes Audiowiedergabesystem (12),
einen Satz von Auslösepunkten, wobei die Auslösepunkte taktil und/oder farblich unterscheidbar sind (8 und 9),
einen Computer mit drahtlosen Kommunikationsfähigkeiten, mit mehreren Kontakten, mit Batteriebetrieb und Sensoranbindung (10), eine passive oder aktive Funkfrequenz-Identifikationsfunktion zur Verwendung in einem Identifikationsmechanismus für intelligente Objekte (3DPO) (11), einen Ein-/Aus-Schalter für das intelligente Objekt (3DPO) (13), einen Ladeanschluss für das intelligente Objekt (3DPO) (18).

2. Mensch-Maschine-Schnittstellensystem, das einen Satz intelligenter Objekte (3DPO) (1 und 2) umfasst,
wobei das System umfasst
einen Satz intelligenter mobiler Geräte (7),
ein Kommunikationsnetzwerk (5), auf das die intelligenten Objekte (1 und 2), die intelligenten mobilen Geräte (7) sowie ein Systemserver (6) zugreifen,
einen Satz von Bilderfassungseinrichtungen (3), die dazu geeignet sind, die intelligenten Objekte zu erfassen und auf das Kommunikationsnetzwerk (5) zuzugreifen,
einen Systemserver (6), der dazu geeignet ist, auf das Kommunikationsnetzwerk (5) zuzugreifen, und auf eine Datenbank (6) zuzugreifen, in der Computervisionsalgorithmen (4) für den Betrieb des Computervisions-Subsystems (3 und 4), digitale Ressourcendaten, Benutzerprofildaten sowie Protokolldaten der Systemnutzung (6) gespeichert sind, und der dazu geeignet ist, den Datenfluss zwischen intelligenten Objekten (6), intelligenten mobilen Geräten (7) und Bilderfassungseinrichtungen (3) zu steuern und zu protokollieren,
wobei die intelligenten Objekte (1 und 2) umfassen:
eine Hülle, die der Morphologie des intelligenten Objekts entspricht, einen Satz von Auslösepunkten (8 und 9), wobei die Auslösepunkte taktil und/oder farblich unterscheidbar sind,
ein Audiosystem (12), das dazu eingerichtet ist, über Kopplung oder Pairing mit einem externen tragbaren Gerät zur Audiowiedergabe verbunden zu werden,
einen Computer mit drahtlosen Kommunikationsfähigkeiten (10), mit mehreren Kontakten, mit Batteriebetrieb (17) und mit Verbindung zu Sensoren (16), eine passive oder aktive Funkfrequenz-Identifikationsfunktion (11) zur Verwendung in einem Identifikationsmechanismus für intelligente Objekte (3DPO), einen Ein-/Aus-Schalter für das intelligente Objekt (3DPO) (13),
einen Ladeanschluss für das intelligente Objekt (3DPO) (18).

3. Mensch-Maschine-Schnittstellensystem nach Anspruch 1 oder 2, wobei die Auslösepunkte physische Schalter mit beweglichen Teilen (9) umfassen.

4. Mensch-Maschine-Schnittstellensystem nach Anspruch 1 oder 2, wobei die Auslösepunkte kapazitive Schalter (9) umfassen.

5. Mensch-Maschine-Schnittstellensystem nach Anspruch 4, wobei die kapazitiven Schalter durch die Veränderung physikalischer Eigenschaften aktiviert werden, die aus dem taktilen Kontakt der Finger des Benutzers über unterschiedliche Zeitdauern hinweg resultiert (9).

6. Mensch-Maschine-Schnittstellensystem nach Anspruch 1 oder 2, wobei die Auslösepunkte als synthetische Auslösepunkte (8) implementiert sind.

7. Mensch-Maschine-Schnittstellensystem nach Anspruch 6, wobei die synthetischen Auslösepunkte durch die Erkennung von Benutzergesten auf den synthetischen Auslösepunkten (8) mittels des Computer-Vision-Subsystems (3 und 4) aktiviert werden.

8. Verfahren zur Mensch-Maschine-Interaktion unter Verwendung des Systems nach einem der Ansprüche 1 bis 7, wobei das Verfahren einen taktilen Kontakt eines Benutzers mit dem intelligenten Objekt (1 und 2) umfasst, sowie die Möglichkeit für den Benutzer, eine Reihe von Funktionen im Zusammenhang mit dem intelligenten Objekt zu aktivieren, wobei die Reihe von Funktionen die Möglichkeit umfasst, Textnarrative über ein Audiowiedergabesystem (12 und 7) anzuhören,
wobei die Narrationen aus einer Datenbank (6) abgeleitet sind, die operativ mit einem Systemserver (6) verbunden ist, und bei Aktivierung der jeweiligen Funktion durch den Benutzer sowie entsprechend einem entsprechenden Benutzerprofil von der Datenbank (6) über ein drahtloses Kommunikationsnetzwerk (5) an das intelligente Objekt (1 und 2) übertragen werden,
wobei die Reihe von Funktionen ferner umfasst:
die Möglichkeit einer passiven oder aktiven Funkfrequenz-Identifizierung des genannten intelligenten Objekts,
die Möglichkeit, die Steuerung der Audiowiedergabe durch den Benutzer für ein gegebenes intelligentes Objekt zu ermöglichen, entweder durch taktilen Kontakt mit dem intelligenten Objekt (2) oder durch Erkennung von Benutzergesten in Bezug auf die Oberfläche des intelligenten Objekts (1) mittels eines Computer-Vision-Subsystems (3 und 4),
die Möglichkeit, das intelligente Objekt aufzuladen,
die Möglichkeit der Kopplung oder des Pairings des genannten intelligenten Objekts mit einem externen tragbaren Gerät zur Audiowiedergabe.

9. Verfahren zur Mensch-Maschine-Interaktion nach Anspruch 8,
wobei die Aktivierung der genannten Reihe von Funktionen am intelligenten Objekt durch den Benutzer eine Aktivierung mittels taktilen Kontakts mit dem intelligenten Objekt oder mittels Erkennung von Benutzergesten in Bezug auf die Oberfläche des intelligenten Objekts durch ein Computer-Vision-Subsystem (3 und 4) umfasst,
wobei das Anhören von Textnarrativen nach Wahl des Benutzers entweder über ein intelligentes mobiles Gerät (7) oder über den in das intelligente Objekt eingebetteten Audioplayer (12) erfolgt.

## Revendications

1. Système d'interface homme-machine comprenant
un ensemble d'objets intelligents (3DPO) (1 et 2),
le système comprend
un réseau de communication (5) auquel les objets intelligents ont accès,
un ensemble de supports de capture d'images (3) capables d'enregistrer les objets intelligents (1 et 2) et d'accéder au réseau de communication (5),
un serveur système (6) capable d'accéder au réseau de communication (5) et à la base de données (6), dans laquelle sont stockés des algorithmes de vision par ordinateur (4) pour le fonctionnement du sous-système de vision par ordinateur (3), des données de ressources numériques (6), des données de profil utilisateur et des données de journalisation de l'utilisation du système (6), et capable de contrôler et de journaliser le flux de données (6) entre les objets intelligents et les supports de capture d'images (3),
où lesdits objets intelligents comprennent
une coque correspondant à la morphologie de l'objet intelligent,
un système de lecture audio intégré (12),
un ensemble de points de déclenchement, où les points de déclenchement sont tactiles et/ou se distinguent par leur couleur (8 et 9),
un ordinateur doté de capacités de communication sans fil, de multiples contacts, d'un fonctionnement sur batterie et d'une connectivité par capteurs (10),
une fonction d'identification par radiofréquence passive ou active destinée à être utilisée dans un mécanisme d'identification (11) d'objet intelligent (3DPO),
un interrupteur marche/arrêt (13) d'objet intelligent (3DPO),
un point de recharge (18) d'objet intelligent (3DPO).

2. Système d'interface homme-machine comprenant
un ensemble d'objets intelligents (3DPO) (1 et 2),
le système comprend
un ensemble d'appareils mobiles intelligents (7),
un réseau de communication (5) accessible aux objets intelligents (1 et 2), aux appareils mobiles intelligents (7) et au serveur système (6),
un ensemble de supports de capture d'images (3) capables d'enregistrer les objets intelligents et d'accéder au réseau de communication (5),
un serveur système (6) capable d'accéder au réseau de communication (5) et à la base de données (6), dans laquelle sont stockés des algorithmes de vision par ordinateur (4) pour le fonctionnement du sous-système de vision par ordinateur (3 et 4), des données de ressources numériques, des données de profil utilisateur et des données de journalisation de l'utilisation du système (6), et capable de contrôler et de journaliser le flux de données entre les objets intelligents (6), les appareils mobiles intelligents (7) et les supports de capture d'images (3),
où les objets intelligents (1 et 2) comprennent
une coque correspondant à la morphologie de l'objet intelligent,
un ensemble de points de déclenchement (8 et 9), où les points de déclenchement sont tactiles et/ou se distinguent par leur couleur,
un système audio (12) apte à être connecté par couplage ou appairage à un dispositif portatif externe de lecture audio
un ordinateur doté de capacités de communication sans fil (10), de multiples contacts, d'un fonctionnement sur batterie (17) et d'une connectivité aux capteurs (16),
une fonction d'identification par radiofréquence passive ou active (11) destinée à être utilisée dans un mécanisme d'identification d'objet intelligent (3DPO),
un interrupteur marche/arrêt (13) d'objet intelligent (3DPO),
un point de recharge (18) d'objet intelligent (3DPO).

3. Système d'interface homme-machine selon la revendication 1 ou 2, où les points de déclenchement comprennent des commutateurs mécaniques à pièces mobiles (9).

4. Système d'interface homme-machine selon la revendication 1 ou 2, où les points de déclenchement comprennent des commutateurs capacitifs (9).

5. Le système d'interface homme-machine selon la revendication 4, où les commutateurs capacitifs sont activés par la modification des propriétés physiques résultant du contact tactile des doigts de l'utilisateur pendant des temps variables (9).

6. Système d'interface homme-machine selon la revendication 1 ou 2, où les points de déclenchement sont mis en œuvre en tant que points de déclenchement synthétiques (8).

7. Le système d'interface homme-machine selon la revendication 6, où les points de déclenchement synthétiques sont activés par la reconnaissance des gestes de l'utilisateur par le sous-système de vision par ordinateur (3 et 4) sur les points de déclenchement synthétiques (8).

8. Méthode d'interface homme-machine qui utilise le système d'une quelconque des revendications 1 à 7 et comprend
un contact tactile d'un utilisateur avec l'objet intelligent (1 et 2),
où l'utilisateur a la possibilité d'activer un ensemble de fonctions liées à l'objet intelligent,
où l'ensemble de fonctions comprend
la capacité d'écouter des récits textuels à travers un système de reproduction audio (12 et 7),
où les récits proviennent d'une base de données (6) coopérativement connectée à un serveur système (6) et sont transmis de la base de données (6) à l'objet intelligent (1 et 2) par un réseau de communication sans fil (5) dès l'activation de la fonction respective par l'utilisateur et selon le profil d'utilisateur correspondant,
où l'ensemble de fonctions inclut également
la capacité d'identification dudit objet intelligent par radiofréquence passive ou active,
la capacité de contrôler la lecture audio par l'utilisateur pour un objet intelligent donné, soit par un contact tactile avec l'objet intelligent (2), soit par la reconnaissance des gestes de l'utilisateur par rapport à la surface de l'objet intelligent (1) grâce au sous-système de vision par ordinateur (3 et 4),
la capacité de modifier l'objet intelligent,
la capacité de couplage ou d'appairage dudit objet intelligent à un dispositif portatif externe de lecture audio.

9. Méthode d'interface homme-machine selon la revendication 8,
où une activation dudit ensemble de fonctions de l'objet intelligent par l'utilisateur comprend l'activation par un contact tactile avec l'objet intelligent ou par la reconnaissance des gestes de l'utilisateur par rapport à la surface de l'objet intelligent grâce au sous-système de vision par ordinateur (3 et 4),
où l'écoute des récits textuels se fait au choix de l'utilisateur, soit à partir d'un appareil mobile intelligent (7), soit à partir d'un lecteur audio incorporé dans l'objet intelligent (12).
